# EUROPÄISCHE PATENTSCHRIFT

(11) **EP 3 542 057 B1**
(45) Veröffentlichungstag und Bekanntmachung des Hinweises auf die Patenterteilung: **23.08.2023**
(21) Anmeldenummer: 17801330.6
(22) Anmeldetag: 28.09.2017
(51) Int. Cl.: F03D 15/00, F16H 1/22

(54) **GETRIEBE FÜR EINE WINDKRAFTANLAGE**
GEAR UNIT FOR A WIND POWER PLANT
TRANSMISSION POUR UNE ÉOLIENNE

(30) Priorität: 18.11.2016 DE 102016122205
(43) Veröffentlichungstag der Anmeldung: 25.09.2019
(73) Patentinhaber: Universität Kassel, 34125 Kassel (DE)
(72) Erfinder: SKALEY, Christian, 34132 Kassel (DE); LERNER, Marcel, 41460 Neuss (DE); RIENÄCKER, Adrian, 82049 Pullach (DE); DEDEKIND, Alexander, 34121 Kassel (DE); UMBACH, Sascha, 34121 Kassel (DE); OCHSE, Gerald, 34121 Kassel (DE)
(74) Vertreter: Walther Bayer Faber Patentanwälte PartGmbB
(86) Internationale Anmeldenummer: PCT/DE2017/100829
(87) Internationale Veröffentlichungsnummer: WO 2018/091019

(56) Entgegenhaltungen:
- EP-A2- 1 961 958
- DE-A1-102015 010 101
- US-A1- 2003 222 456
- US-B1- 6 304 002

## Beschreibung

Die Erfindung betrifft ein Getriebe in Anordnung in einer Windenergieanlage, aufweisend ein um eine Rotorachse drehbar angeordnetes Sonnenrad, das mit einem Rotor der Windenergieanlage koppelbar ist, ein Getriebegehäuse, innerhalb dem das Sonnenrad drehbar angeordnet ist, und mehrere Satelliteneinheiten, die über den Umfang des Sonnenrades verteilt angeordnet sind, die mit dem Sonnenrad in Wirkverbindung stehen und über die den Satelliteneinheiten zuordbare Generatoren antreibbar sind.

### STAND DER TECHNIK

Aus der DE 101 34 245 A1 ist ein Getriebe für eine Windenergieanlage bekannt, und ein Sonnenrad ist um eine Rotorachse drehbar angeordnet, welches mit einem Rotor der Windenergieanlage gekoppelt werden kann. Um den Umfang des Sonnenrades verteilt befinden sich mehrere Satelliteneinheiten, die mit dem Sonnenrad in Wirkverbindung stehen, und die langsame Bewegung, die über den Rotor in das Sonnenrad eingebracht wird, kann über schnell drehende Ausgangsritzelwellen abgegriffen werden. Die einzelnen Satelliteneinheiten bilden dabei eine übersetzende Wirkverbindung zwischen dem Sonnenrad und den Ausgangsritzelwellen, an die Generatoren angekoppelt werden können. Nachteilhafterweise ergibt sich über die Anordnungen der Satelliteneinheiten, bestehend aus Planetenwellen, ein asymmetrischer Kraftfluss durch die Planetenwellen.

Die Planetenwellen verwinden sich dabei im Betrieb, und an den Zahneingriffen kann es zu Verkleinerungen der Zahnkontaktflächen und damit zu Lastüberhöhungen kommen. Im Falle von beschädigten Planetenrädern oder Planetenritzeln ist ein Austausch der Planetenwellen möglich, sollte das Sonnenrad jedoch auch Schaden genommen haben, so ist die Demontage des gesamten Getriebes notwendig.

Die DE 11 2010 004 882 T5 offenbart ein Getriebe für eine Windenergieanlage mit einem um eine Rotorachse drehbaren Sonnenrad, welches mit dem Rotor der Windenergieanlage koppelbar ist, und lediglich an einer Umfangsposition befindet sich eine Satelliteneinheit mit einer Abgriffswelle, über die ein direkter Abgriff einer Drehbewegung des Sonnenrades erfolgt, um einen Generator an die Satelliteneinheit anzukoppeln. Nachteilhafterweise ergibt sich auch bei dieser Ausführung eine asymmetrische Krafteinleitung in ein Gehäuse des Getriebes, zudem kann nur ein einziger Generator angetrieben werden.

Die US 6 304 002 B1 zeigt ein gattungsbildendes Getriebe für eine Windenergieanlage mit einem Zentralzahnkranz, der mit dem Rotor der Windenergieanlage koppelbar ist und mit mehreren Zahnrädern, die um den Zentralzahnkranz verteilt angeordnet sind und die mit jeweiligen Generatoren koppelbar sind.

Die US 2003/222456 A1 offenbart ein Getriebe für eine Windenergieanlage, aufweisend ein um eine Rotorachse drehbar angeordnetes Sonnenrad, das mit einem Rotor der Windenergieanlage koppelbar ist, und wobei mehrere Satelliteneinheiten über den Umfang des Sonnenrades verteilt angeordnet sind, die mit dem Sonnenrad in Wirkverbindung stehen und über die Satelliteneinheiten zuordbare Generatoren angetrieben werden können.

Aus der EP 1 961 958 A2 ist ein weiteres Getriebe für eine Windenergieanlage bekannt, ebenfalls aufweisend ein um eine Rotorachse drehbar angeordnetes Sonnenrad, das mit einem Rotor der Windenergieanlage koppelbar ist, und wobei mehrere Satelliteneinheiten über den Umfang des Sonnenrades verteilt angeordnet sind, die mit dem Sonnenrad in Wirkverbindung stehen und über die Satelliteneinheiten zuordbare Generatoren angetrieben werden können.

Aus der DE 10 2015 010 101 A1 ist ein Getriebe für eine Windenergieanlage bekannt, aufweisend ein um eine Rotorachse drehbar angeordnetes Sonnenrad, das mit einem Rotor der Windenergieanlage koppelbar ist, und wobei das Getriebe ein Getriebegehäuse aufweist, in dem ein Sonnenrad drehbar angeordnet ist, wobei mehrere Satelliteneinheiten über den Umfang des Sonnenrades verteilt im Getriebegehäuse aufgenommen sind, die mit dem Sonnenrad in Wirkverbindung stehen und über die Satelliteneinheiten zuordbare Generatoren angetrieben werden können. Derartige Getriebe sind sehr groß ausgeführt und weisen eine derartige Masse auf, dass selbst der Austausch einer einzelnen Satelliteneinheit nicht mehr ohne maschinelle Unterstützung erfolgen kann. Insbesondere für Wartungs- und Reparaturaufgaben ergibt sich insofern das Problem bei Getrieben, die in einer Windenergieanlage angeordnet sind, Einzelteile auszutauschen, die eine Masse aufweisen, die ohne technische Unterstützung nicht mehr handhabbar sind.

Durch das sehr hohe Gewicht des Anlagenkopfes mit dem Rotor und der Rotoraufnahme werden erhebliche Kräfte in das Getriebe eingeleitet, die von einer entsprechenden Getriebeaufnahme und schließlich auch von einem Getriebegehäuse oder einem Gehäuse des Getriebes aufgenommen werden müssen. Nicht zuletzt auch durch die auf den Rotor wirkenden Windlasten wirken auf das Getriebe Stauch-, Streck- und Biegelasten ständig wechselnder Richtung ein. Auch mechanische sowie aerodynamische Unwuchten belasten das Getriebe während der gesamten Lebensdauer. Das Getriebe einer Windenergieanlage ist folglich besonders hohen Belastungen ausgesetzt und muss auf einer Gondel der Windenergieanlage eine gewisse Wartungsfreundlichkeit besitzen. Ein Schaden am Getriebe einer besonders kompakt aufgebauten Windenergieanlage bedeutet häufig einen längeren und damit kostenintensiven Ausfall der Anlage. Insbesondere im Offshore-Bereich ist der Austausch eines gesamten Getriebes sehr aufwändig und muss mit Spezialmitteln wie beispielsweise mit einem Kranschiff oder dergleichen erfolgen. Der sich in der Gondel einer Windenergieanlage befindende Kran kann beispielsweise bis etwa 8t tragen, wobei das Gewicht eines gesamten Getriebes einer Windenergieanlage die Tragkraft des sogenannten Bordkrans erheblich übersteigt. Folglich ist es wünschenswert, auch nur einzelne Teile eines gesamten Getriebes einer Windenergieanlage austauschen zu können. Eine bessere Krafteinleitung, insbesondere mit einer Symmetrie um die Rotorachse, ermöglicht dabei eine leichtere und kleinere Konstruktion des Getriebes bei gleichem Leistungsdurchsatz, sodass mit einer kleineren und leichteren Bauweise des Getriebes die Wartungsfreundlichkeit desselben wieder gesteigert wird.

### OFFENBARUNG DER ERFINDUNG

Aufgabe der Erfindung ist die Weiterbildung eines Getriebes für eine Windenergieanlage, das eine erhöhte Wartungsfreundlichkeit aufweist. Das Getriebe soll hierfür insbesondere so weitergebildet werden, dass Teile des Getriebes einzeln ausgetauscht werden können. Dabei soll das Getriebe bei kleineren Gesamtabmessungen jedoch einen hohen Gesamt-Leistungsdurchsatz ermöglichen, insbesondere sollen mit dem Getriebe mehrere Generatoren mechanisch unabhängig voneinander angetrieben werden können.

Diese Aufgabe wird ausgehend von einem Getriebe für eine Windenergieanlage gemäß dem Oberbegriff des Anspruches 1 und ausgehend von einem Verfahren gemäß Anspruch mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die Satelliteneinheiten zwei mit dem Sonnenrad jeweils in Eingriff stehende Zahnwellen und eine Abtriebswelle aufweisen, wobei die Abtriebswelle mit den beiden Zahnwellen in Eingriff steht und mit einem zugeordneten Generator koppelbar ist, wobei die Satelliteneinheiten modulartig ausgeführt und lösbar an einem Getriebegehäuse angeordnet sind, und wobei das Getriebegehäuse um das Sonnenrad drehbar ausgebildet ist. Der Kerngedanke der Erfindung sind vom Getriebe lösbare, einzeln handhabbare und damit modulartig ausgeführte Satelliteneinheiten, die mehrwellig ausgeführt sind und damit einen erhöhten Leistungsdurchsatz erlauben. Die Satelliteneinheiten weisen erfindungsgemäß zwei Zahnwellen auf, die jeweils einzeln mit dem Sonnenrad in Eingriff stehen, und die Zahnwellen wirken mit einer Abtriebswelle zusammen, wobei die Zähneverhältnisse so ausgelegt sind, dass die Abtriebswelle eine höhere Drehzahl aufweist als die Zahnwellen. Folglich ergibt sich die Möglichkeit eines erhöhten Leistungsdurchsatzes durch jede der einzelnen Satelliteneinheiten, um einen entsprechend dimensionierten Generator an die jeweilige Satelliteneinheit anzukoppeln. Durch die modulartige Ausführung der Satelliteneinheit kann diese als Einzelteil vom Getriebe gelöst werden, und die Zahnwellen können aus dem Eingriff mit dem Sonnenrad entfernt werden. Das Satellitenmodul kann frei vom Verlust wesentlicher Mengen an Schmieröl und damit umweltfreundlich getrennt vom Getriebe gehandhabt und transportiert werden. Um die Wartungsfreundlichkeit des Getriebes weiter zu erhöhen, sollten mit dem Bordkran der Windenergieanlage die einzelnen Satelliteneinheiten entnommen werden können. Hierfür ist das Getriebegehäuse erfindungsgemäß drehbar um das Sonnenrad ausgebildet, sodass die Satelliteneinheiten nach oben gedreht werden können, die mit dem Kran entnommen werden sollen. Die Satelliteneinheiten sind insbesondere so ausgeführt, dass die Zahnwellen und die Abtriebswelle in dem Satellitenrahmen eine insbesondere gleichschenkelige Dreieckskonstellation bilden und mittels Wälzlager oder Gleitlagern im Satellitenrahmen gelagert sind.

Als wesentlicher Vorteil ergibt sich zunächst ein geringes Einzelgewicht der Satelliteneinheiten, die mit dem Bordkran der Windenergieanlage handhabbar sind. Ein weiterer Vorteil der erfindungsgemäß ausgeführten modular entnehmbaren Satelliteneinheiten liegt darin, dass durch die Ausgestaltung mit zwei Zahnwellen und einer Abtriebswelle Kräfteverhältnisse entstehen, die symmetrisch sind und damit die Belastung des Getriebes minimal wird.

Durch die freie Entnehmbarkeit der Satelliteneinheiten können die Zahnwellen vom Sonnenrad entkoppelt werden, ferner kann der Generator von der Abtriebswelle entkoppelt werden. Dadurch entsteht ein modularer Gesamtaufbau des Getriebes, sodass die Komponenten des Getriebes auf dem Turm der Windenergieanlage vereinzelt werden können. Im Ergebnis ergibt sich eine besondere Wartungsfreundlichkeit trotz eines hochintegrierten Komplettsystems.

Mit Vorteil wird die Satelliteneinheit erfindungsgemäß mit einem Satellitenrahmen ausgeführt, in dem die beiden Zahnwellen und die Abtriebswelle drehbar aufgenommen sind. Der Satellitenrahmen der Satelliteneinheit nimmt dabei die im Betrieb des Getriebes auftretenden Kräfte zwischen den Zahnwellen und der Abtriebswelle auf, sodass mit mehreren Satelliteneinheiten auf dem Umfang des Sonnenrades verteilt mehrere in sich geschlossene Einzel-Kraftsysteme aufgebaut werden, und sodass sich für das Gesamtgetriebe eine ideale Kräftebelastung für das Gehäuse des Getriebes ergibt.

Nach einer vorteilhaften Variante des erfindungsgemäßen Getriebes sind die Satelliteneinheiten an einer Außenseite an das Getriebegehäuse befestigt, wobei das Getriebegehäuse zur Aufnahme der Satelliteneinheiten mehrere über dem Umfang gleich verteilt angeordnete Aufnahmeöffnungen aufweist. Damit kann das Getriebe mit einer verminderten Anzahl von Satelliteneinheiten betrieben werden, und beispielsweise weist das Getriebegehäuse sechs von der Außenseite erreichbare Aufnahmeöffnungen auf, von denen alle Aufnahmeöffnungen mit Satelliteneinheiten bestückt werden können, oder es sind nur einzelne Aufnahmeöffnungen mit Satelliteneinheiten bestückt. Die Bestückung mit Satelliteneinheiten sollte dabei eine Symmetrie um die Rotorachse des Sonnenrades ergeben, sodass die bestückten Aufnahmeöffnungen beispielsweise eine zueinander gleiche Winkelteilung aufweisen sollten. Damit ist das Getriebe nicht nur modulweise aufbaubar sondern auch modulweise betreibbar. Werden beispielsweise aufgrund der Windverhältnisse und des Energiebedarfs weniger als die maximal mögliche Anzahl der Generatoren benötigt, so werden auch nur einzelne Aufnahmeöffnungen mit Satelliteneinheiten bestückt. Freie Aufnahmeöffnungen können dabei mit einer Verschlussplatte verschlossen werden, um die Steifigkeit des Getriebegehäuses zu erhöhen.

Eine vorteilhafte Ausführung der Satelliteneinheiten wird erreicht, wenn die Zahnwellen wenigstens einen ersten Verzahnungsabschnitt mit einer kleineren Anzahl von Zähnen aufweisen, die mit den Zähnen des Sonnenrades kämmen, und die Zahnwellen können wenigstens einen zweiten Verzahnungsabschnitt mit einer größeren Anzahl von Zähnen aufweisen, die mit den Zähnen der Abtriebswelle kämmen. Im Ergebnis dreht die Abtriebswelle mit einer höheren Drehzahl als die Zahnwellen, wobei die Zahnwellen mit einer wesentlich größeren Drehzahl rotieren als das Sonnenrad. Durch die zweistufige Ausführung der Satelliteneinheiten entstehen geringere Verzahnungskräfte zwischen den Zahnwellen und dem Sonnenrad, sodass die Satelliteneinheiten einen höheren Leistungsdurchsatz ermöglichen.

Auch ist es von Vorteil, wenn ein erster Verzahnungsabschnitt mittig auf der Zahnwelle zwischen zwei äußeren zweiten Verzahnungsabschnitten ausgebildet ist. Die Verzahnungen können dabei Doppel-Schrägverzahnungen umfassen, um die Aufnahme von Axialkräften über den Satellitenrahmen der Satelliteneinheiten zu vermeiden, wobei auch eine Geradverzahnung denkbar ist.

Die Erfindung richtet sich weiterhin auf ein Verfahren zum Austausch von Komponenten eines Getriebes für eine Windenergieanlage, aufweisend ein um eine Rotorachse drehbar angeordnetes Sonnenrad, das mit einem Rotor der Windenergieanlage koppelbar ist, ein Getriebegehäuse, innerhalb dem das Sonnenrad drehbar angeordnet ist, und wobei mehrere Satelliteneinheiten über dem Umfang des Sonnenrades verteilt angeordnet sind, die mit dem Sonnenrad in Wirkverbindung stehen und über die den Satelliteneinheiten zuordbare Generatoren antreibbar sind, wobei für das Verfahren erfindungsgemäß folgende Schritte vorgesehen sind: Ausführen des Getriebes mit einem Getriebegehäuse, Bereitstellen der Satelliteneinheiten in einer modularen Ausführung, Drehen des Getriebegehäuses, um eine zu entnehmende Satelliteneinheit in eine obere, insbesondere mit einem Kran handhabbare Position zu bringen, Lösen und außenseitiges Entnehmen der Satelliteneinheit vom Getriebegehäuse und Anordnen einer ausgetauschten Satelliteneinheit am Getriebegehäuse.

Das Getriebegehäuse wird erfindungsgemäß vor dem Lösen und dem außenseitigen Entnehmen der Satelliteneinheit um das Sonnenrad soweit gedreht, dass die zu entnehmende Satelliteneinheit in eine obere Position gebracht wird, insbesondere um die Satelliteneinheit mit dem Bordkran nach oben vom Getriebegehäuse abzuheben. Der besondere Vorteil des erfindungsgemäßen Verfahrens liegt in der Möglichkeit der Vereinzelung von mehrwelligen Komponenten, die durch die Ausbildung eines separaten Satellitenrahmens eine Satelliteneinheit bilden, die ein Gesamtgewicht aufweist, das geringer ist als das zulässige Hebegewicht des Bordkrans.

Das erfindungsgemäße Verfahren zeichnet sich insbesondere dadurch aus, dass die ausgetauschte Satelliteneinheit vor dem Anordnen an das Getriebegehäuse an einem Referenzsegment des Sonnenrades angepasst und/oder einjustiert wird. Die reparierte oder neue Satelliteneinheit, die an das Getriebegehäuse wieder befestigt werden soll, muss mit dem Sonnenrad eine Verzahnung bilden können, die ein passgenaues Zahnzwischen-Zahn-Einsetzen der Zähne der Satelliteneinheit in das Sonnenrad ermöglicht. Der Vorteil ist dabei, dass das Sonnenrad und auch die Zahnwelle und/oder die Abtriebswelle vor Ort beliebig verdreht werden können.

Insbesondere weisen die Satelliteneinheiten zwei mit dem Sonnenrad jeweils in Eingriff stehende Zahnwellen und eine Abtriebswelle auf, wobei die Abtriebswelle mit den beiden Zahnwellen in Eingriff steht und mit einem zugeordneten Generator koppelbar ist, wobei die Anpassung und/oder Einjustage die Winkelstellungen wenigstens der Zahnwellen am Referenzsegment vorgenommen wird. Die Verzahnung kann am Referenzsegment so angepasst werden, dass weitere Anpassungen auf der Gondel der Windenergieanlage selbst nicht notwendig sind. Die Besonderheit der entnehmbaren Satelliteneinheit liegt darin, dass trotz einer Einjustage mittels eines Referenzsegmentes die Zähne trotzdem bei nachträglicher Verdrehung außerhalb des Referenzsegmentes in andere Zahnlücken passen würden, was die Montage erheblich erleichtert.

Konkret erfolgt die Anpassung so, dass die Winkelstellung wenigstens eines auf der Zahnwelle ausgebildeten ersten Verzahnungsabschnittes relativ zu wenigstens einem auf der Zahnwelle ausgebildeten zweiten Verzahnungsabschnitt verändert wird. Beispielsweise kann zumindest einer der Verzahnungsabschnitte auf der Zahnwelle über eine hydraulische Druckbeaufschlagung von einer Grundwelle der Zahnwelle gelöst werden, sodass dieser gelöste Verzahnungsabschnitt auf der Grundwelle und damit auch gegenüber dem weiteren Verzahnungsabschnitt verdrehbar ist. Die Verdrehung erfolgt dabei unter Anpassung der Verzahnung an dem Referenzsegment. Sobald die Anpassung erfolgt ist, wird die hydraulische Druckbeaufschlagung wieder entnommen, und die gegeneinander einjustierte Winkelstellung der beiden Verzahnungsabschnitte wird beibehalten. Danach ist die Satelliteneinheit frei handhabbar, und eine Verdrehung der Zahnwellen und der Abtriebswelle und natürlich auch des Sonnenrades ist für die Montage der Satelliteneinheit vor Ort, also auf der Gondel der Windenergieanlage, unschädlich, da in jeder Drehposition die Zähne passgenau in die Zahnlücken des Sonnenrades passen.

Das Verfahren ist weiterhin dadurch gekennzeichnet, dass das Getriebegehäuse mehrere Aufnahmeöffnungen aufweist, wobei die Anordnung von Satelliteneinheiten in allen oder in einer geringeren Anzahl der Aufnahmeöffnungen bedarfsabhängig vorgenommen wird, wobei die Anordnung der Satelliteneinheiten so vorgenommen wird, dass um die Rotorachse eine Symmetrie insbesondere in Bezug auf die Geometrie und in Bezug auf die wirkenden Kräfte im Getriebegehäuse gebildet wird. Die Bestückung des Getriebes mit einzelnen Satelliteneinheiten und zugeordneten Generatoren erfolgt folglich bedarfsabhängig, und die Windenergieanlagen können so konfektioniert werden, dass diese eine optimale Ausnutzung vorhandener Windenergie ermöglichen, ohne dass zu viele oder zu wenige Generatoren in Betrieb genommen werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht des Getriebes mit einer vollen Bestückung des Getriebegehäuses mit Satelliteneinheiten und einer vollen Anzahl von zugeordneten Generatoren,
- Figur 2: das Getriebe gemäß Figur 1, wobei lediglich drei auf dem Umfang zueinander gleich verteilte Satelliteneinheiten am Getriebegehäuse angeordnet sind, sodass auch nur drei Generatoren vorgesehen sind, von denen zwei in der Perspektive sichtbar sind und
- Figur 3: eine perspektivische Ansicht der Satelliteneinheit mit zwei Zahnwellen und einer Abtriebswelle, die aufgenommen sind in einem Satellitenrahmen der Satelliteneinheit.

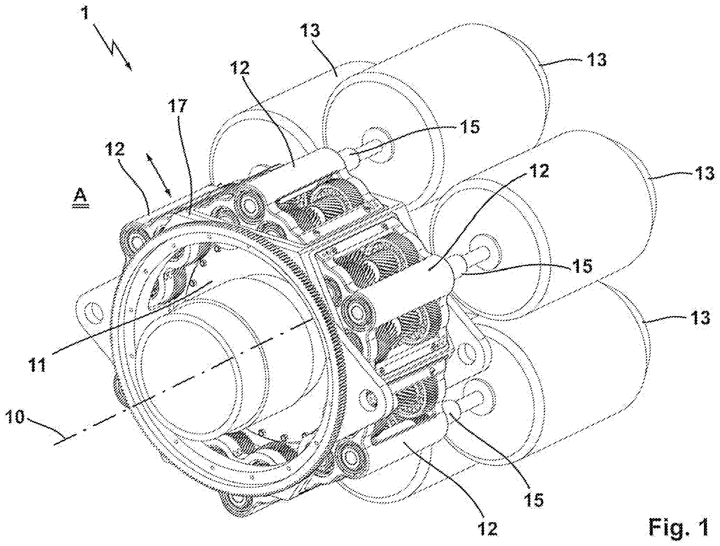

Figur 1 zeigt in einer perspektivischen Ansicht ein Getriebe 1 für eine Windenergieanlage mit den Merkmalen der Erfindung. Um eine Rotorachse 10 ist ein Sonnenrad 11 drehbar aufgenommen, wobei die Aufnahme und Lagerung des Sonnenrades 11 in dem Ausführungsbeispiel nicht näher gezeigt und in an sich bekannter Weise ausgeführt sind. Das Getriebe 1 weist als Grundstruktur ein Getriebegehäuse 17 auf, an dem auf dem Umfang verteilt mehrere Satelliteneinheiten 12 angeordnet sind. Die Satelliteneinheiten 12 wirken mit dem Sonnenrad 11 zusammen, sodass bei einer Drehbewegung des Sonnenrades 11 um die Rotorachse 10 eine schnelle Drehbewegung der Abtriebswellen 15 der Satelliteneinheiten 12 erfolgt. Die Abtriebswellen 15 sind mit den Generatoren 13 gekoppelt.

Die auf dem Umfang gleich verteilte Bestückung des Getriebegehäuses 17 mit Satelliteneinheiten 12 ergibt ein ausgeglichenes Kräfteverhältnis um das Sonnenrad 11, und die Generatoren 13 sind ebenfalls gleich verteilt und symmetrisch um die Rotorachse 10 angeordnet.

Die Satelliteneinheiten 12 sind lösbar am Getriebegehäuse 17 angeordnet, und bei einem Defekt einer Satelliteneinheit 12 kann diese radial zur Rotorachse 10 zur Außenseite A hin entnommen werden. Nachfolgend kann eine Austausch-Satelliteneinheit 12 in der gleichen Aufnahmeöffnung im Getriebegehäuse 17 wieder montiert werden. Eine weitere Besonderheit besteht darin, dass auch das Sonnenrad 11 im Schadensfall nach einer Entnahme aller Satelliteneinheiten 12 axial demontiert und per Bordkran ausgetauscht werden kann.

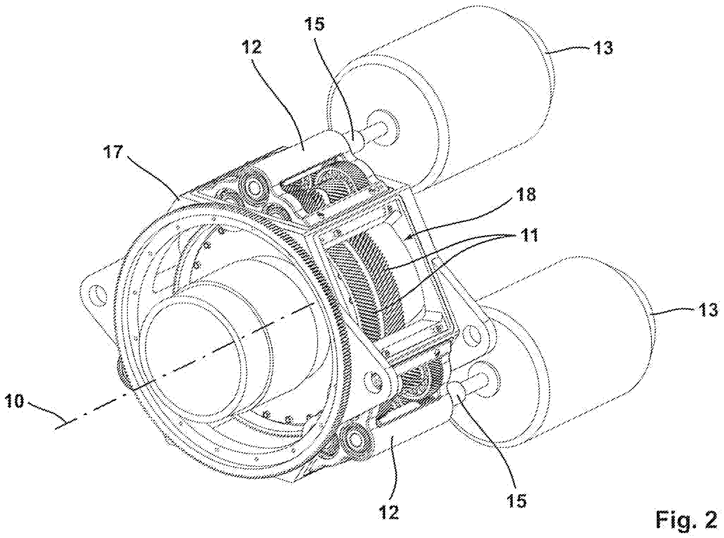

Figur 2 zeigt ein Beispiel des Getriebes 1 mit einer verminderten Bestückung des Getriebegehäuses 17 mit Satelliteneinheiten 12, sodass auch eine geringere Anzahl von Generatoren 13 vorgesehen ist. Durch das nur teilweise mit Satelliteneinheiten 12 besetzte Getriebegehäuse 17 sind Aufnahmeöffnungen 18 gezeigt, in die die Satelliteneinheiten 12 eingesetzt werden können, und die Aufnahmeöffnungen 18 sind über der Stirnseite des Sonnenrades 11 ausgebildet, sodass die Satelliteneinheiten 12 mit dem Sonnenrad 11 zusammenwirken können, wenn diese in jeweiligen Aufnahmeöffnungen 18 eingefügt sind. Durch die zugeordnete Anzahl der Generatoren 13 zur Bestückung des Getriebegehäuses 17 mit den Satelliteneinheiten 12 werden diese mit den Abtriebswellen 15 der Satelliteneinheiten 12 verbunden, und wird das Sonnenrad 11 um die Rotorachse 10 angetrieben, können die Generatoren 13 auf gleiche Weise und mit einem gewünschten Einzel-Leistungsniveau betrieben werden, wie auch bei einer vollen Bestückung des Getriebes 1 gemäß Figur 1. Das Getriebegehäuse 17 ist sechseckig ausgebildet mit der Option 2, 3, 4, oder 6 Generatoren 13 symmetrisch zu montieren und zu betreiben. Diese Option schließt mit ein, im Rahmen einer optimierten Betriebsstrategie von mehreren montierten Generatoren 13 jeden einzelnen Generator 13 unterschiedlich zu belasten.

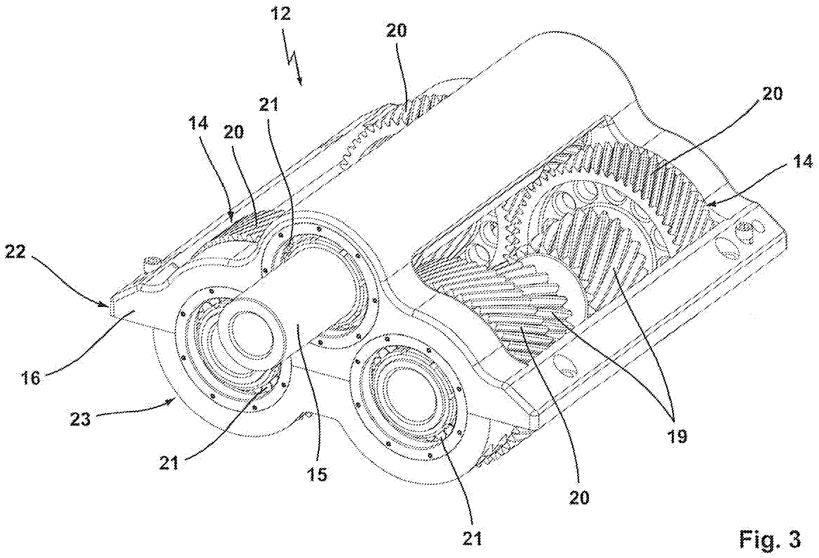

Figur 3 zeigt eine perspektivische Ansicht einer Satelliteneinheit 12 zur Anordnung an ein Getriebegehäuse 17 eines Getriebes 1 gemäß den Figuren 1 und 2. Die Satelliteneinheit 12 besitzt als Grundkörper einen Satellitenrahmen 16, und der Satellitenrahmen 16 besitzt ein Oberteil 22 und ein Unterteil 23. Die Zahnwellen 14 und die Abtriebswelle 15 sind mittels Wälzlagern 21 im Satellitenrahmen 16 gelagert.

Das Ausführungsbeispiel zeigt die Zahnwellen 14 mit innenliegenden ersten Verzahnungsabschnitten 19 zur Wirkverbindung mit dem Sonnenrad 11 und mit außenliegenden zweiten Verzahnungsabschnitten 20 zur Wirkverbindung mit der Abtriebswelle 15. Die Wellen 14 und 15 sind in einer Dreiecks-Anordnung im Satellitenrahmen 16 untergebracht, und durch die Zähneverhältnisse der ersten und zweiten Verzahnungsabschnitte 19 und 20 sowie der Abtriebswelle 15 dreht die Abtriebswelle 15 mit einer höheren Drehzahl als die Zahnwellen 14.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Getriebe

- 10: Rotorachse
- 11: Sonnenrad
- 12: Satelliteneinheit
- 13: Generator
- 14: Zahnwelle
- 15: Abtriebswelle
- 16: Satellitenrahmen
- 17: Getriebegehäuse
- 18: Aufnahmeöffnung
- 19: erster Verzahnungsabschnitt
- 20: zweiter Verzahnungsabschnitt
- 21: Wälzlager
- 22: Oberteil
- 23: Unterteil

- A: Außenseite

## Patentansprüche

1. Getriebe (1) in Anordnung in einer Windenergieanlage, aufweisend ein um eine Rotorachse (10) drehbar angeordnetes Sonnenrad (11), das mit einem Rotor der Windenergieanlage koppelbar ist, ein Getriebegehäuse (17), innerhalb dem das Sonnenrad (11) drehbar angeordnet ist, und mehrere Satelliteneinheiten (12), die über den Umfang des Sonnenrades (11) verteilt angeordnet sind, die mit dem Sonnenrad (11) in Wirkverbindung stehen und über die den Satelliteneinheiten (12) zuordbare Generatoren (13) antreibbar sind,
**dadurch gekennzeichnet,**
**dass** die Satelliteneinheiten (12) zwei mit dem Sonnenrad (11) jeweils in Eingriff stehende Zahnwellen (14) und eine Abtriebswelle (15) aufweisen, wobei die Abtriebswelle (15) mit den beiden Zahnwellen (14) in Eingriff steht und mit einem zugeordneten Generator (13) koppelbar ist, und wobei die Satelliteneinheiten (13) modulartig ausgeführt und lösbar am Getriebegehäuse (17) angeordnet sind, und wobei das Getriebegehäuse (17) um das Sonnenrad (11) drehbar ausgebildet ist.

2. Getriebe (1) nach Anspruch 1,
**dadurch gekennzeichnet,**
**dass** die Satelliteneinheiten (12) einen Satellitenrahmen (16) aufweisen, in dem die beiden Zahnwellen (14) und die Abtriebswelle (15) drehbar aufgenommen sind.

3. Getriebe (1) nach Anspruch 1 oder 2,
**dadurch gekennzeichnet,**
**dass** die Satelliteneinheiten (12) von einer Außenseite (A) an dem Getriebegehäuse (17) befestigt sind, wobei das Getriebegehäuse (17) zur Aufnahme der Satelliteneinheiten (12) mehrere über dem Umfang gleich verteilt angeordnete Aufnahmeöffnungen (18) aufweist.

4. Getriebe (1) nach einem der vorgenannten Ansprüche,
**dadurch gekennzeichnet,**
**dass** die Zahnwellen (14) wenigstens einen ersten Verzahnungsabschnitt (19) mit einer kleineren Anzahl von Zähnen aufweisen, die mit den Zähnen des Sonnenrades (11) kämmen und dass die Zahnwellen (14) wenigstens einen zweiten Verzahnungsabschnitt (20) mit einer größeren Anzahl von Zähnen aufweisen, die mit den Zähnen der Abtriebswelle (15) kämmen.

5. Getriebe (1) nach Anspruch 4,
**dadurch gekennzeichnet,**
**dass** ein erster Verzahnungsabschnitt (19) mittig auf der Zahnwelle (14) zwischen zwei äußeren zweiten Verzahnungsabschnitten (20) ausgebildet ist.

6. Getriebe (1) nach einem der vorgenannten Ansprüche,
**dadurch gekennzeichnet,**
**dass** die Verzahnungen eine Schrägverzahnung oder eine Doppelschrägverzahnung aufweisen.

7. Getriebe (1) nach einem der Ansprüche 2 bis 6,
**dadurch gekennzeichnet,**
**dass** die Zahnwellen (14) und die Abtriebswelle (15) in dem Satellitenrahmen (16) eine Dreieckkonstellation bilden und mittels Wälzlagern (21) gelagert sind.

8. Verfahren zum Austausch von Komponenten eines Getriebe (1) in Anordnung in einer Windenergieanlage, aufweisend ein um eine Rotorachse (10) drehbar angeordnetes Sonnenrad (11), das mit einem Rotor der Windenergieanlage koppelbar ist, ein Getriebegehäuse (17), innerhalb dem das Sonnenrad (11) drehbar angeordnet ist,, und wobei mehrere Satelliteneinheiten (12) über den Umfang des Sonnenrades (11) verteilt angeordnet sind, die mit dem Sonnenrad (11) in Wirkverbindung stehen und über die den Satelliteneinheiten (12) zuordbare Generatoren (13) antreibbar sind, wobei das Verfahren wenigstens die folgenden Schritte umfasst:
- Ausführen des Getriebes (1) mit einem Getriebegehäuse (17),
- Bereitstellen der Satelliteneinheiten (13) in einer modulartigen Ausführung,
- Drehen des Getriebegehäuses (17), um eine zu entnehmende Satelliteneinheit (13) in eine obere, insbesondere mit einem Kran handhabbare Position zu bringen,
- Lösen und außenseitiges Entnehmen der Satelliteneinheit (13) vom Getriebegehäuse (17) und
- Anordnen einer ausgetauschten Satelliteneinheit (13) am Getriebegehäuse (17).

9. Verfahren nach Anspruch 8 oder 9,
**dadurch gekennzeichnet,**
**dass** die ausgetauschte Satelliteneinheit (12) vor dem Anordnen an dem Getriebegehäuse (17) an einem Referenzsegment des Sonnenrades (11) angepasst und/oder einjustiert wird.

10. Verfahren nach einem der Ansprüche 8 bis 10,
**dadurch gekennzeichnet,**
**dass** die Satelliteneinheiten (12) zwei mit dem Sonnenrad (11) jeweils in Eingriff stehende Zahnwellen (14) und eine Abtriebswelle (15) aufweisen, wobei die Abtriebswelle (15) mit den beiden Zahnwellen (14) in Eingriff steht und mit einem zugeordneten Generator (13) koppelbar ist, wobei bei der Anpassung die Winkelstellung wenigstens eines auf einer Zahnwelle (14) ausgebildeten ersten Verzahnungsabschnittes (19) relativ zu wenigstens einem auf der Zahnwelle (14) ausgebildeten zweiten Verzahnungsabschnitt (20) verändert wird.

11. Verfahren nach einem der Ansprüche 8 bis 11,
**dadurch gekennzeichnet,**
**dass** das Getriebegehäuse (17) mehrere Aufnahmeöffnungen (18) aufweist, wobei die Anordnung von Satelliteneinheiten (12) in allen oder in einer geringeren Anzahl der Aufnahmeöffnungen (18) bedarfsabhängig vorgenommen wird, wobei die Anordnung der Satelliteneinheiten (12) so vorgenommen wird, dass um die Rotorachse (10) eine Symmetrie im Getriebegehäuse (17) gebildet wird.

## Claims

1. A gearbox (1) in an arrangement in a wind turbine comprising a sun gear (11) that is arranged rotatably about a rotor axis (10) and that is couplable to a rotor of the wind turbine, a gearbox casing (17) within which the sun gear (11) is rotatably arranged, and a plurality of satellite units (12) that are arranged distributed over the periphery of the sun gear (11), that are in operative connection with the sun gear (11), and that are drivable by generators (13) that can be associated with the satellite units (12),
**characterized in that**
the satellite units (12) comprise two gear shafts (14) respectively in engagement with the sun gear (11) and one output shaft (15), with the output shaft (15) being in engagement with the two gear shafts (14) and being couplable with an associated generator (13), and with the satellite units (15) being designed in modular form and being releasably arranged at the gearbox casing (17), and with the gearbox casing (17) being rotatable about the sun gear (11).

2. A gearbox (1) in accordance with claim 1,
**characterized in that**
the satellite units (12) have a satellite frame (16) in which the two gear shafts (14) and the output shaft (15) are rotatably received.

3. A gearbox (1) in accordance with claim 1 or claim 2,
**characterized in that**
the satellite units (12) are fastened to the gearbox casing (17) from an outer side (A), with the gearbox casing (17) having a plurality of reception openings (18) arranged evenly distributed over the periphery for the reception of the satellite units (12).

4. A gearbox (1) in accordance with one of the preceding claims,
**characterized in that**
the gear shafts (14) have at least a first toothed section (19) having a smaller number of teeth that mesh with the teeth of the sun gear (11), and **in that** the gear shafts (14) have at least a second toothed section (20) having a larger number of teeth that mesh with the teeth of the output shaft (15).

5. A gearbox (1) in accordance with claim 4,
**characterized in that**
a first toothed section (19) is formed centrally between two outer second toothed sections (20) on the gear shaft (14),

6. A gearbox (1) in accordance with one of the preceding claims,
**characterized in that**
the toothed portions have helical gear teeth or dual helical gear teeth.

7. A gearbox (1) in accordance with one of the claims 2 to 6,
**characterized in that**
the gear shaft (14) and the output shaft (15) form a triangular constellation in the satellite frame (16) and are supported by means of roller bearings (21).

8. A method of replacing components of a gearbox (1) in an arrangement in a wind turbine comprising a sun gear (11) that is arranged rotatably about a rotor axis (10) and that is couplable to a rotor of the wind turbine, a gearbox casing (17) within which the sun gear (11) is rotatably arranged, and wherein a plurality of satellite units (12) are arranged distributed over the periphery of the sun gear (11) that are in operative connection with the sun gear (11), and via which generators (13) that can be associated with the satellite units (12) are drivable, said method at least comprising the following steps:
- designing the gearbox (1) with a gearbox casing (17);
- providing the satellite units (13) in a modular design;
- turning the gearbox casing (17) to move a satellite unit (13) to be removed into an upper position that can in particular be handled by a crane;
- releasing and outside removal of the satellite unit (13) from the gearbox casing (17); and
- arranging a replaced satellite unit (13) at the gearbox casing (17).

9. A method in accordance with claim 8 or claim 9,
**characterized in that**
the replaced satellite unit (12) is adapted and/or adjusted to a reference segment of the sun gear (11) before the arrangement at the gearbox casing (17).

10. A method in accordance with one of the claims 8 to 10,
**characterized in that**
the satellite units (12) have two gear shafts (14) respectively in engagement with the sun gear (11) and one output shaft (15), with the output shaft (15) being in engagement with the two gear shafts (14) and being couplable to an associated generator (13), with, on the adaptation, the angular position of at least a first toothed section (19) formed on a gear shaft (14) being changed relative to at least a second toothed section (20) formed on the gear shaft (14).

11. A method in accordance with one of the claims 8 to 11,
**characterized in that**
the gearbox casing (17) has a plurality of reception openings (18), with the arrangement of satellite units (12) being carried out in all the reception openings (18) or in a smaller number of reception openings (18) in dependence on requirements, and with the arrangement of the satellite units (12) being carried out such that a symmetry is formed about the rotor axis (10) in the gearbox casing (17).

## Revendications

1. Transmission (1) disposée dans une éolienne, comportant un planétaire (11) disposé rotatif autour d'un axe de rotor (10) et qui peut être accouplé à un rotor de l'éolienne, un carter de transmission (17), à l'intérieur duquel le planétaire (11) est disposé rotatif, et plusieurs unités satellites (12), qui sont disposées réparties sur la circonférence du planétaire (11), qui sont en liaison fonctionnelle avec le planétaire (11) et par le biais desquelles des générateurs (13), qui peuvent être associés aux unités satellites (12), peuvent être entraînés,
**caractérisée en ce que**
les unités satellites (12) comportent deux arbres cannelés (14) respectivement en prise avec le planétaire (11) et un arbre de sortie (15), l'arbre de sortie (15) étant en prise avec les deux arbres cannelés (14) et pouvant être accouplé à un générateur (13) associé, et les unités satellites (13) étant exécutées de manière modulaire et étant disposées de manière démontable sur le carter de transmission (17), et le carter de transmission (17) étant réalisé rotatif autour du planétaire (11).

2. Transmission (1) selon la revendication 1,
**caractérisée en ce que**
les unités satellites (12) comportent un cadre de satellites (16) dans lequel les deux arbres cannelés (14) et l'arbre de sortie (15) sont reçus de manière rotative.

3. Transmission (1) selon la revendication 1 ou 2,
**caractérisée en ce que**
les unités satellites (12) sont fixées depuis un côté extérieur (A) au carter de transmission (17), le carter de transmission (17) comportant plusieurs ouvertures de réception (18) disposées réparties uniformément sur la circonférence pour la réception des unités satellites (12).

4. Transmission (1) selon l'une des revendications précédentes,
**caractérisée en ce que**
les arbres cannelés (14) comportent au moins une première partie cannelée (19) avec un plus petit nombre de cannelures, qui s'engrènent avec les dents du planétaire (11) et **en ce que** les arbres cannelés (14) comportent au moins une seconde partie cannelée (20) avec un plus grand nombre de cannelures, qui s'engrènent avec les dents de l'arbre de sortie (15).

5. Transmission (1) selon la revendication 4,
**caractérisée en ce que**
une première partie cannelée (19) est réalisée au milieu de l'arbre cannelé (14) entre deux secondes parties cannelées (20) extérieures.

6. Transmission (1) selon l'une des revendications précédentes,
**caractérisée en ce que**
les cannelures comportent une cannelure oblique ou une cannelure en chevrons.

7. Transmission (1) selon l'une des revendications 2 à 6,
**caractérisée en ce que**
les arbres cannelés (14) et l'arbre de sortie (15) forment une constellation en triangle dans le cadre de satellites (16) et sont montés sur paliers au moyen de paliers à roulement (21).

8. Procédé de remplacement de composants d'une transmission (1 ) disposée dans une éolienne, comportant un planétaire (11) disposé rotatif autour d'un axe de rotor (10) et qui peut être accouplé à un rotor de l'éolienne, un carter de transmission (17), à l'intérieur duquel le planétaire (11) est disposé rotatif, et dans lequel plusieurs unités satellites (12) sont disposées réparties sur la circonférence du planétaire (11), lesquelles sont en liaison fonctionnelle avec le planétaire (11) et par le biais desquelles des générateurs (13), qui peuvent être associés aux unités satellites (12), peuvent être entraînés, le procédé comprenant au moins les étapes suivantes consistant à :
- exécuter la transmission (1) avec un carter de transmission (17),
- mettre à disposition les unités satellites (13) dans une exécution modulaire,
- tourner le carter de transmission (17) pour amener une unité satellite (13) à retirer dans une position supérieure, en particulier de manière à pouvoir être manipulée au moyen d'une grue,
- desserrer et retirer par le côté extérieur l'unité satellite (13) du carter de transmission (17) et
- disposer une unité satellite (13) remplacée sur le carter de transmission (17).

9. Procédé selon la revendication 8 ou 9,
**caractérisé en ce que**
l'unité satellite (12) remplacée est adaptée et/ou ajustée à un segment de référence du planétaire (11) avant la disposition sur le carter de transmission (17).

10. Procédé selon l'une des revendications 8 à 10,
**caractérisé en ce que**
les unités satellites (12) comportent deux arbres cannelés (14) respectivement en prise avec le planétaire (11) et un arbre de sortie (15), l'arbre de sortie (15) étant en prise avec les deux arbres cannelés (14) et pouvant être accouplé à un générateur (13) associé, dans lequel, lors de l'adaptation, la position angulaire d'au moins une première partie cannelée (19) réalisée sur un arbre cannelé (14) est modifiée par rapport à au moins une seconde partie cannelée (20) réalisée sur l'arbre cannelé (14).

11. Procédé selon l'une des revendications 8 à 11,
**caractérisé en ce que**
le carter de transmission (17) comporte plusieurs ouvertures de réception (18), la disposition d'unités satellites (12) étant effectuée en fonction des besoins dans toutes ou dans un nombre inférieur des ouvertures de réception (18), la disposition des unités satellites (12) étant effectuée de telle manière qu'une symétrie se forme dans le carter de transmission (17) autour de l'axe de rotor (10).
